(19)

Europäisches
Patentamt
European
Patent Office
Office européen
des brevets

(11)　**EP 2 011 891 A1**

(12)　# EUROPEAN PATENT APPLICATION
published in accordance with Art. 153(4) EPC

(43) Date of publication:
**07.01.2009 Bulletin 2009/02**

(21) Application number: **06811655.7**

(22) Date of filing: **05.10.2006**

(51) Int Cl.:
$C22C\ 38/00^{(2006.01)}$ $C21D\ 9/46^{(2006.01)}$
$C22C\ 38/58^{(2006.01)}$ $F16D\ 65/12^{(2006.01)}$

(86) International application number:
**PCT/JP2006/320358**

(87) International publication number:
**WO 2007/122754 (01.11.2007 Gazette 2007/44)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **21.04.2006 JP 2006117375**

(71) Applicant: **JFE Steel Corporation Tokyo, 100-0011 (JP)**

(72) Inventors:
• **HIRASAWA, Junichiro**
 **Chiyoda-ku, Tokyo 100-0011 (JP)**

• **YAMASHITA, Takako**
 **Chiyoda-ku, Tokyo 100-0011 (JP)**
• **MAKIISHI, Noriko**
 **Chiyoda-ku, Tokyo 100-0011 (JP)**
• **HAMADA, Etsuo**
 **Chiyoda-ku, Tokyo 100-0011 (JP)**
• **UJIRO, Takumi**
 **Chiyoda-ku, Tokyo 100-0011 (JP)**
• **FURUKIMI, Osamu**
 **Chiyoda-ku, Tokyo 100-0011 (JP)**

(74) Representative: **Grünecker, Kinkeldey, Stockmair & Schwanhäusser Anwaltssozietät Leopoldstrasse 4 80802 München (DE)**

(54)　**BRAKE DISC HAVING HIGH TEMPER SOFTENING RESISTANCE**

(57)　A brake disk having proper hardness and high temper softening resistance is provided. In particular, the brake disk has a martensitic structure having prior-austenite grains with an average diameter of 8 $\mu$m or more, a hardness of 32 to 38 HRC, and high temper softening resistance. The brake disk contains, by mass, 0.1% or less of C, 1.0% or less of Si, 2.0% or less of Mn, 10.5% to 15.0% of Cr, 2.0% or less of Ni, greater than 0.5% to 4.0% of Cu, 0.02% to 0.3% of Nb, and 0.1% or less of N and further contains C, N, Nb, Cr, Si, Ni, Mn, Mo, and Cu, the remainder being Fe and unavoidable impurities, such that the following inequalities are satisfied:

$$5Cr + 10Si + 15Mo + 30Nb - 9Ni - 5Mn - 3Cu - 225N - 270C < 45 \qquad (1)$$

$$0.03 \leq \{C + N - (13 / 93)Nb\} \leq 0.09 \qquad (2).$$

**EP 2 011 891 A1**

# FIG. 1

**Description**

Technical Field

The present invention relates to disks used for disc brakes for motorcycles, motorcars, bicycles, and the like. The present invention particularly relates to a brake disk having proper hardness and high temper softening resistance. The term "high temper softening resistance" used herein means such a feature that a reduction in hardness due to high temperature is small and initial proper hardness can be substantially maintained.

Background Art

Disc brakes used for motorcycles, motorcars, and the like slow the rotation of wheels in such a manner that kinetic energy is converted into heat energy by the friction between brake disks and brake pads. Therefore, the brake disks need to have excellent abrasion resistance and toughness in addition to proper hardness. In particular, a law hardness of the brake disks accelerates abrasion of disks because of the friction with brake pads and reduces the braking performance. An extreme hardness thereof causes brake squeal. Therefore, the hardness of the brake disks is controlled to be about 32 to 38 HRC in Rockwell C hardness (HRC) as specified in JIS Z 2245.

A material conventionally used for the brake disks is martensitic stainless steel in view of hardness and corrosion resistance. In the past, martensitic stainless steel, such as SUS 420J2 (JIS Z 4304), having a high carbon content was used for the disks after quenching and tempering treatment. Since the workload of tempering treatment is large, low-carbon martensitic stainless steel has been recently used for the brake disks as disclosed in Japanese Unexamined Patent Application Publication No. 57-198249 or 60-106951 because this steel can be used directly after quenching treatment.

In view of global environmental conservation, recent motorcycles and motorcars need to have high fuel efficiency. A reduction in vehicle weight is effective in achieving high fuel efficiency; hence, lightweight vehicles are demanded. Even disc brakes, which are a part of brake mechanism (or brake system), are no exception. Compact or low-thickness (thin) brake disks are being experimentally produced. The compact or thin brake disks have low heat capacity; hence, the temperature of the disks is increased to 650°C or more by friction heat during braking. Therefore, there is a problem in that conventional brake disks made of martensitic stainless steel are reduced in durability because the conventional brake disks are tempered by the friction heat and therefore is softened.

In order to cope with such a demand, the following sheet has been proposed as disclosed in Japanese Unexamined Patent Application Publication No. 2002-146489: a low-carbon martensitic stainless steel sheet which contains N and one or more of Ti, Nb, V, and Zr and which can be effectively prevented from being softened by heating during the use of a disc brake. Japanese Patent 3315974 (Japanese Unexamined Patent Application Publication No. 2001-220654) discloses a stainless steel for disc brakes. The stainless steel contains Nb or Nb and one or more of Ti, V, and B and therefore can be prevented from being temper-softened. Japanese Unexamined Patent Application Publication No. 2002-121656 discloses steel for disc brake rotors. The GP value (the percentage of austenite at high temperature) of this steel is adjusted to 50% or more and this steel contains one or both of Nb and V, the GP value being determined by a function of the content of C, N, Ni, Cu, Mn, Cr, Si, Mo, V, Ti, and Al in this steel. This steel is prevented from being temper-softened by heating during braking.

The stainless steel, for brake disks, disclosed in Japanese Unexamined Patent Application Publication No. 2002-146489, Japanese Patent 3315974, or Japanese Unexamined Patent Application Publication No. 2002-121656 has a problem in that a relatively large amount of high-cost alloying elements need to be used and therefore the production cost thereof is high and also has a problem in that the stainless steel is significantly reduced in hardness after being held at 650°C for a long time. It is an object of the present invention to solve the above problems and to provide a brake disk having proper hardness and high temper softening resistance.

Disclosure of Invention

In order to solve the above problems, the inventors have intensively investigated factors affecting the temper softening resistance of brake disks made from martensitic stainless steel sheets. As a result, the inventors have found that the following disk has proper hardness after quenching (32 to 38 HRC) and excellent temper softening resistance (a hardness of 30 HRC or more after being tempered at 650°C for one hour): a brake disk that is produced from low-carbon martensitic stainless steel with a specific composition and then tempered so as to have prior-austenite grains with an average grain diameter of 8 $\mu$m or more and/or tempered such that the ratio of the amount of precipitated Nb to the amount of total Nb is adjusted to a predetermined value or less.

Furthermore, the inventors have found that the following operation is effective in enhancing the temper softening resistance of low-carbon martensitic stainless steel: the density of dislocations present in a martensitic structure formed by quenching is controlled within a proper range and the dislocation density of such a martensitic structure is controlled within a proper range in such a manner that an element, such as Cu, primarily forming fine precipitates on the dislocations is used to prevent the recovery of the dislocations. This has resulted in the completion of the present invention.

The present invention provides a brake disk having a martensitic structure having prior-austenite grains with an average diameter of 8 $\mu$m or more, a hardness of 32 to 38 HRC, and high temper softening resistance. The brake disk contains 0.1% or less C, 1.0% or less Si, 2.0% or less Mn, 10.5% to 15.0% Cr, 2.0% or less Ni, greater than 0.5% to 4.0% Cu, 0.02% to 0.3% Nb, and 0.1% or less N on a mass basis and further contains C, N, Nb, Cr, Si, Ni, Mn, Mo, and Cu, the remainder being Fe and unavoidable impurities, such that the following inequalities are satisfied:

$$5Cr + 10Si + 15Mo + 30Nb - 9Ni - 5Mn - 3Cu - 225N - 270C < 45 \tag{1}$$

$$0.03 \le \{C + N - (13 / 93)Nb\} \le 0.09 \tag{2}.$$

In the brake disk, a precipitated Nb-to-total Nb ratio that is defined as the ratio of the amount of precipitated Nb to the amount of total Nb is less than 0.75.

In the brake disk, the square root ($\sqrt{\rho}$) of the density $\rho$ of dislocations present in the martensitic structure is within a range from 0.8 to $1.3 \times 10^8$ m$^{-1}$.

The brake disk has a hardness of 30 HRC or more after being tempered at 650°C for one hour or fine Cu precipitates formed at the dislocations. The square root ($\sqrt{\rho}$) of the density p of the dislocations present in the martensitic structure tempered at 650°C for one hour is within a range from 0.6 to $1.3 \times 10^8$ m$^{-1}$.

The brake disk further contains at least one component selected from the following groups: one or two selected from the A group consisting of, by mass, 0.01% to 2.0% of Mo and 0.01% to 1.0% of Co; one or more selected from the B group consisting of, by mass, 0.02% to 0.3% of Ti, 0.02% to 0.3% of V, 0.02% to 0.3% of Zr, and 0.02% to 0.3% of Ta; and one or two selected from the C group consisting of, by mass, 0.0005% to 0.0050% of B and 0.0005% to 0.0050% of Ca.

The present invention provides a low-cost brake disk with high temper softening resistance. The brake disk has a hardness of 32 to 38 HRC and also has a hardness of 30 HRC or more after being tempered at 650°C for one hour.

Brief Description of Drawings

Fig. 1 is a graph showing the influence of the average diameter of prior-austenite grains on the hardness (HRC) of hardened or tempered steel sheets.
Fig. 2 is a graph showing the influence of the ratio of the amount of precipitated Nb to the amount of total Nb on the hardness (HRC) of a tempered steel sheet.

Best Modes for Carrying Out the Invention

Experiments leading to the development of the present invention will now be described.

Low-carbon martensitic stainless steel sheets containing, by mass, 0.04% of C, 12% of Cr, 0.1% of Si, 1.5% of Mn, 0.04% of N, 0.12% of Nb, 0.7% of Ni, and 1.0% of Cu, the remainder being substantially Fe, were hardened in such a manner that the steel sheets were heated at temperatures between 1000°C and 1150°C at four levels, held at the temperatures for one minute, and then air-cooled to 200°C at an average cooling rate of 10°C/sec. A cross-section of the quenched steel sheets were observed for metal microstructure, whereby prior-austenite grains (hereinafter referred to as prior-$\gamma$ grains) were measured for average diameter. The prior-$\gamma$ grains of each steel sheet heated at 1000°C, 1050°C, 1100°C, or 1150°C had an average diameter of 5, 8, 10, or 15 $\mu$m, respectively. The hardened steel sheets were tempered in such a manner that the steel sheets were held at 650°C for one hour and then air-cooled. The untempered steel sheets and the tempered steel sheets were measured for surface hardness (HRC) with a Rockwell hardness meter after surface oxide layers (scale) were removed therefrom.

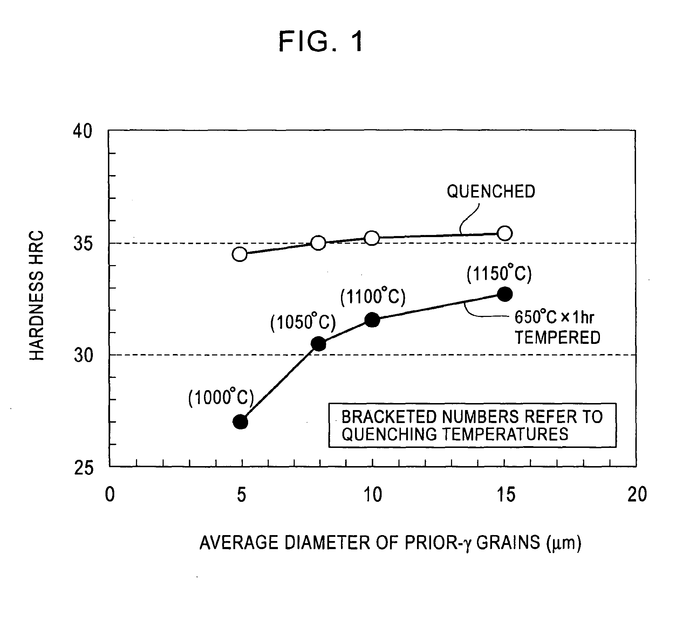

Fig. 1 shows the influence of the average diameter of the prior-austenite grains (prior-$\gamma$ grains) on the surface hardness (HRC) of the steel sheets. As is clear from Fig. 1, the quenched steel sheets having the prior-$\gamma$ grains with an

average diameter of 8 μm or more have a hardness of 32 to 38 HRC and the steel sheets tempered at 650°C for one hour have a hardness of 30 HRC or more although these steel sheets do not contain a large amount of alloying elements. These results suggest that in order to allow a quenched steel sheet to have a hardness of 32 to 38 HRC and in order to allow a steel sheet tempered at 650°C for one hour to have a hardness of 30 HRC or more, prior-γ grains in a martensitic structure formed by quenching need to have an average diameter of 8 μm or more.

The reason why an increase in the diameter of prior-γ grains formed by quenching increases temper softening resistance is not clear yet but is probably as described below. In usual, alloying elements, such as Cr and Nb, present in crystal grains in the form of solid solutions diffuse to form fine precipitates (chromium carbides, niobium carbonitrides, and the like) in the crystal grains during tempering subsequent to hardening. The alloying elements reach grain boundaries to form coarse precipitates at the grain boundaries. In a metal microstructure containing fine prior-γ grains, the diffusion length necessary for the alloying elements present in the prior-γ grains to reach boundaries of the prior-γ grains is small; hence, coarse precipitates (chromium carbides) are readily formed at the prior-γ grains boundaries by tempering. This reduces fine precipitates in crystal grains to cause insufficient precipitation hardening. The coarse precipitates formed at the grain boundaries have a small contribution to precipitation hardening. On the other hand, in a metal microstructure containing course prior-γ grains, the diffusion length that alloying elements, such as Cr and Nb, present in crystal grains in the form of solid solutions migrate to boundaries of prior-γ grains is large; hence, the alloying elements hardly reach the prior-γ grain boundaries and therefore form fine precipitates in the prior-γ grains. These precipitates prevent the movement of dislocations. This probably leads to an increase in temper softening resistance.

Low-carbon martensitic stainless steel sheets containing, by mass, 0.04% of C, 12.1% of Cr, 0.2% of Si, 1.6% of Mn, 0.04% of N, 0.13% of Nb, 0.6% of Ni, and 1.0% of Cu, the remainder being substantially Fe, were hardened in such a manner that the steel sheets were heated at temperatures between 900°C and 1150°C at six levels, held at the temperatures for one minute, and then air-cooled to 200°C at an average cooling rate of 10°C/sec. The amount of Nb precipitated in the form of precipitates and the amount of total Nb contained in each steel sheet were measured, whereby the ratio of the amount of precipitated Nb to the amount of total Nb, that is, the precipitated Nb-to-total Nb ratio was determined. The hardened steel sheets were tempered in such a manner that the steel sheets were held at 650°C for one hour and then air-cooled. Surface oxide layers (scale) were removed from the steel sheets. The resulting steel sheets were measured for surface hardness with a Rockwell hardness meter. The amount of precipitated Nb was determined by chemically analyzing the residue of electrolytic extraction from the sample and the amount of total Nb was determined by ordinary chemical analysis.

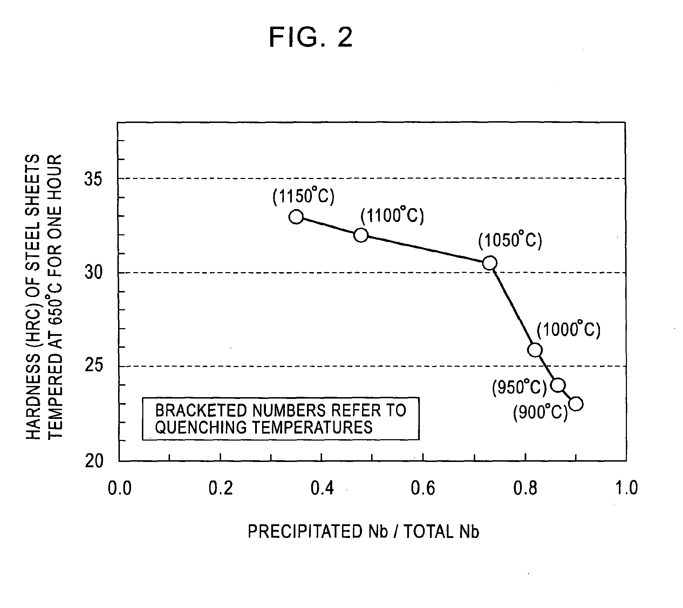

Fig. 2 is based on the analysis results and shows the influence of the precipitated Nb-to-total Nb ratio of each quenched steel sheet on the hardness of the tempered steel sheet. As is clear from Fig. 2, in order to secure the temper softening resistance of the steel sheets such that the steel sheets tempered at 650°C for one hour have a hardness of 30 HRC or more, the precipitated Nb-to-total Nb ratio of each steel sheet needs to be less than 0.75.

The reason why the quenched steel sheets with a low precipitated Nb-to-total Nb ratio have high temper softening resistance is probably as described below. Since most of Nb contained in the unhardened steel sheets is present in the form of precipitates, the precipitated Nb-to-total Nb ratio is usually 0.9 or more. A portion of precipitated Nb forms a solid solution because of heating during hardening. Solute Nb forms fine precipitates during tempering subsequent to hardening. This contributes to precipitation hardening. If the steel sheets are not sufficiently heated during quenching, precipitated Nb is incompletely smelted and therefore the amount of solute Nb is small. Hence, the amount of Nb precipitates formed by tempering is small. This probably leads to a reduction in temper softening resistance.

A martensitic structure obtained by quenching contains dense dislocations. It is well known that an increase in the density of the dislocations leads to an increase in hardness. The inventors have investigated the relationship between the density of dislocations in martensitic steels and the hardness of brake disks. As a result, the inventors have found that there is a tight correlation between the brake disk hardness and the dislocation density, that the brake disk hardness can be therefore controlled within a proper range in such a manner that the dislocation density is adjusted to a proper range, and that it is effective in preventing a brake disk from being softened due to tempering that the recovery of dislocations in a martensitic structure is prevented by any means such that the density of the dislocations therein is maintained within a proper range. Furthermore, the inventors have investigated a technique for inhibiting the recovery of such dislocations and then have found that the dislocation recovery can be securely prevented in such a manner that Cu is added to steel and fine Cu precipitates are formed at the dislocations during tempering.

The present invention has been developed on the basis of the above findings.

The reason why the content of each component in a brake disk according to the present invention is limited to the above range will now be described.

C: 0.1% by mass or less

C is an element determining the hardness of the brake disk. In order to allow the quenched brake disk to have a proper hardness (32 to 38 HRC), the brake disk preferably contains 0.03% by mass or more of C. When the content of C therein is greater than 0.1% by mass, coarse grains of chromium carbide ($Cr_{23}C_6$) are formed, thereby causing rust, a reduction in corrosion resistance, and a reduction in toughness. Therefore, the C content needs to be 0.1% by mass or less. In view of corrosion resistance, the C content is preferably less than 0.05% by mass.

Si: 1.0% by mass or less

Si is an element used as a deoxidizer and therefore the brake disk preferably contains 0.05% by mass or more of Si. Since Si is stabilizes a ferrite phase, an excessive Si content exceeding 1.0% by mass causes a reduction in hardenability, a reduction in quenching hardness, and a reduction in toughness. Therefore, the content of Si therein is limited to 1.0% by mass or less. In view of toughness, the Si content is preferably 0.5% by mass or less.

Mn: 2.0% by mass or less

Mn is an element that is useful in securing constant quenching hardness because Mn prevents a δ-ferrite phase from being formed at high temperature to enhance hardenability. The brake disk preferably contains 0.3% by mass or more of Mn. However, an excessive Mn content exceeding 2.0% by mass causes a reduction in corrosion resistance because Mn reacts with S to form MnS. Therefore, the content of Mn therein is limited to 2.0% by mass or less. In view of an increase in hardenability, the Mn content is preferably greater than 1.0% and more preferably greater than 1.2% on a mass basis.

Cr: 10.5% to 15.0% by mass

Cr is an element essential to secure the corrosion resistance of stainless steel. In order to secure sufficient corrosion resistance, the basic material needs to contain 10.5% by mass or more of Cr. However, a Cr content exceeding 15.0% by mass causes a reduction in workability and a reduction in toughness. Therefore, the content of Cr therein is limited to a range from 10.5% to 15.0% by mass. In order to achieve sufficient corrosion resistance, the Cr content is preferably greater than 11.5% by mass. In order to secure toughness, the Cr content is preferably less than 13.0% by mass.

Ni: 2.0% by mass or less

Ni has an effect of improving corrosion resistance and an effect of increasing temper softening resistance because Ni retards the precipitation of chromium carbides at a temperature higher than 650°C to prevent the reduction in the hardness of a martensitic structure containing an excessive amount of C. Furthermore, Ni has an effect of improving the corrosion resistance of stainless steel and an effect of improving the toughness thereof. Such effects are achieved when the content of Ni in the brake disk is 0.1% by mass or more. However, even if the Ni content exceeds 2.0% by mass, an advantage appropriate to the Ni content cannot be obtained because the increase in temper softening resistance is saturated. Therefore, the Ni content is limited to 2.0% by mass or less. In order to achieve improved temper softening resistance, the Ni content is preferably 0.5% by mass or more.

Cu: greater than 0.5% to 4.0% by mass

Cu is an element significantly improving temper softening resistance because Cu forms fine ε-Cu precipitates at dislocations present in a martensitic structure during quenching. In order to achieve such an effect, the content of Cu in the brake disk needs to be greater than 0.5% by mass. However, a Cu content exceeding 4.0% by mass causes a reduction in toughness. Hence, the Cu content is within a range from greater than 0.5% to 4.0% by mass. In view of toughness, the Cu content is preferably less than 1.5% by mass.

Nb: 0.02% to 0.3% by mass

Nb is an element that improves temper softening resistance, because Nb forms a carbonitride during heating at about 650°C subsequently to hardening to cause precipitation hardening. In order to achieve such an effect, the content of Nb is preferably 0.02% by mass or more. However, an Nb content exceeding 0.3% by mass causes a reduction in toughness. Therefore, the content of Nb in the brake disk is preferably limited to a range from 0.02% to 0.3% by mass. In view of an increase in temper softening resistance, the Nb content is preferably greater than 0.08% and more preferably 0.11% by mass or more. In view of toughness, the Nb content is preferably 0.2% by mass or less.

N: 0.1% by mass or less

N, as well as C, is an element determining the hardness of quenched steel. N forms fine chromium nitride ($Cr_2N$) grains at a temperature of 500°C to 700°C and is effective in increasing temper softening resistance because of the precipitation hardening effect thereof. In order to achieve this effect, the content of N is preferably greater than 0.03% by mass. However, an N content exceeding 0.1% causes a reduction in toughness. Therefore, the N content needs to be limited to 0.1% by mass or less.

The brake disk according to the present invention needs to contain the above components within the above ranges and also needs to satisfy the following inequalities:

$$5Cr + 10Si + 15Mo + 30Nb - 9Ni - 5Mn - 3Cu - 225N - 270C < 45 \qquad (1)$$

$$0.03 \leq \{C + N - (13 / 93)Nb\} \leq 0.09 \qquad (2)$$

wherein Cr, Si, Mo, Nb, Ni, Mn, Cu, N, and C each represent the content (in mass percent) of the corresponding alloying elements. The left-hand side value of Inequality (1) and the middle term value of Inequality (2) are calculated on the basis that the content of Cu, Nb, Mo, or Ni are assumed to be zero when the content of Cu, Nb, Mo or Ni is, by mass, less than 0.01%, less than 0.02%, less than 0.01%, and less than 0.10%, respectively.

$$5Cr + 10Si + 15Mo + 30Nb - 9Ni - 5Mn - 3Cu - 225N - 270C < 45 \qquad (1)$$

Inequality (1) defines a condition for securing excellent hardening stability. The term "excellent hardening stability" used herein means that the range of a quenching temperature achived a desired hardness after quenching is wide. The wide range is caused when the amount of an austenite (γ) phase formed during quenching is 75 volume % or more and the austenite phase is transformed into a martensite phase during cooling for quenching by air-cooling or cooling at a rate faster than air-cooling. When the left-hand side value of Inequality (1) is 45 or more, a constant quenching hardness cannot be achieved because the amount of an austenite phase formed during quenching does not exceed 75% by volume or more or a temperature range forming such an amount of the austenite phase is extremely narrow. Therefore, the left-hand side value of Inequality (1) needs to be limited to less than 45.

$$0.03 \leq \{C + N - (13 / 93)Nb\} \leq 0.09 \qquad (2)$$

Inequality (2) defines a condition for controlling hardness after quenching within a predetermined proper range. Hardness after quenching strongly correlates with the content of C or N. However, C or N has no contribution to hardness after quenching when C or N is bonded with Nb to form Nb carbide or Nb nitride. Therefore, hardness after quenching needs to be estimated using the amount of C or N obtained by subtracting the amounts of C and N in precipitates from the amounts of C and N, respectively, in steel, that is, using the middle term value {C + N - (13 /93)Nb} of Inequality (2). When the middle term value of Inequality (2) is less than 0.03, the hardness after quenching of the brake disk is less than 32 HRC. When the middle term value is greater than 0.09, the hardness is greater than 38 HRC. Therefore, in order to allow the quenched brake disk to have a proper hardness (HRC 32 to 38), the middle term value of Inequality (2) needs to be limited to a range from 0.03 to 0.09.

The brake disk according to the present invention may contain components below as required in addition to the above fundamental components.

One or both of 0.01% to 2.0% of Mo and 0.01% to 1.0% of Co by mass

Mo and Co are elements effective in improving corrosion resistance and therefore the brake disk may contain 0.01% by mass or more of Mo and/or Co respectively. In particular, Mo retards the precipitation of carbonitrides and has a significant contribution to an increase in temper softening resistance. In order to achieve such effects, the content of Mo is preferably 0.02% by mass or more. The increase in temper softening resistance due to Mo can be achieved even if the content of Mo is less than 0.05% by mass. However, even if the content of Mo and/or the content of Co exceeds 2.0% and/or 1.0% by mass, respectively, the increase in corrosion resistance due to Mo and/or Co and the increase in temper softening resistance due to Mo are saturated. Therefore, the content of Mo is preferably limited to up to 2.0% by mass and the content of Co is preferably limited to up to 1.0% by mass.

One or more of 0.02% to 0.3% of Ti, 0.02% to 0.3% of V, 0.02% to 0.3% of Zr, and 0.02% to 0.3% of Ta by mass

Ti, V, Zr, and Ta, as well as Nb, are elements which form carbonitrides to increase temper softening resistance. One or more of these elements may be contained in the brake disk as required. Such an effect of increasing temper softening resistance is obtained when the content of Ti, V, Zr, or Ta is 0.02% by mass or more respectively. In particular, V is effective; hence, the content of V is preferably 0.05% by mass or more and more preferably 0.10% by mass or more. On the other hand, a Ti, V, Zr, or Ta content exceeding 0.3% by mass causes a significant reduction in toughness. Therefore, the content of Ti, at of V, Zr, or Ta is preferably limited to a range from 0.02% to 0.3% by mass respectively.

One or both of 0.0005% to 0.0050% of B and 0.0005% to 0.0050% of Ca on mass basis

B and Ca are elements that have an effect of increasing the hardenability of steel even if their contents are slight. Therefore, 0.0005% by mass or more of B and/or Ca may be contained in the brake disk as required. However, a B or Ca content exceeding 0.0050% by mass causes such an effect to be saturated and also causes a reduction in corrosion resistance. Therefore, the content of B and that of Ca are preferably limited to up to 0.0050% by mass respectively.

The brake disk according to the present invention further contains Fe and unavoidable impurities such as P, S, and Al in addition to the above components. The content of P, that of P, and that of Al in the brake disk are preferably within ranges below.

P: 0.04% by mass or less

P is an element causing a reduction in hot workability; hence, the content of P is preferably small. An excessive reduction in the P content leads to a significant increase in production cost. Therefore, the upper limit of the P content is preferably 0.04% by mass. In view of productivity, the P content is more preferably 0.03% by mass or less.

S: 0.010% by mass or less

S, as well as P, is an element causing a reduction in hot workability; hence, the content of S is preferably small. In consideration of the cost of desulfurization during steel making, the S content is preferably 0.010% by mass or less. In view of hot workability, the S content is more preferably 0.005% by mass or less.

Al: 0.2% by mass or less

Al is an element functioning as a deoxidizer. An excessive amount of Al remaining in steel as an unavoidable impurity causes a reduction in corrosion resistance, a reduction in toughness, and deteriorations in surface properties. Therefore, the content of Al is preferably limited to 0.2% by mass or less. In order to achieve sufficient corrosion resistance, the Al content is more preferably 0.05% by mass or less.

The brake disk according to the present invention may further contain 0.05% by mass or less of each of alkali metals such as Na and Li, alkaline-earth metals such as Mg and Ba, rare-earth elements such as Y and La, and transition metals such as Hf in addition to the above unavoidable impurities. This does not negate advantages of the present invention.

The metal structure of the brake disk according to the present invention will now be described.

Average diameter of prior-γ grains: 8 μm or more

The brake disk according to the present invention can be controlled to have a quenching hardness of 32 to 38 HRC when a steel sheet (martensitic stainless steel sheet) for producing the brake disk contains the components within the above ranges. In order to allow the brake disk tempered at 650°C for one hour to have a hardness of 30 HRC or more, the brake disk needs to have a martensitic structure having prior-γ grains with an average diameter of 8 μm or more as shown in Fig. 1. When the prior-γ grains have an average diameter of less than 8 μm, the amount of fine precipitates in the prior-γ grains is small and therefore high temper softening resistance cannot be achieved. In order to secure temper softening resistance, the prior-γ grains preferably have an average diameter of 10 μm or more and more preferably 15 μm or more. When the prior-γ grains have an average diameter of greater than 30 μm, the facet sizes of brittle fracture surfaces are large, which causes a reduction in toughness. Therefore, the prior-γ grains preferably have an average diameter of 30 μm or less.

Precipitated Nb-to-total Nb ratio of quenched brake disk: less than 0.75

In order to allow the brake disk, tempered at 650° for one hour, according to the present invention to have a hardness of 30 HRC or more, the brake disk needs to have a precipitated Nb-to-total Nb ratio of less than 0.75 as shown in Fig. 2. This is because when the precipitated Nb-to-total Nb ratio of the hardened brake disk is 0.75 or more, the amount of Nb present in grains in the form of solid solutions is too small to achieve sufficient temper softening resistance. In order to secure high temper softening resistance, the precipitated Nb-to-total Nb ratio of the brake disk is preferably 0.5 or less and more preferably 0.4 or less. When the precipitated Nb-to-total Nb ratio thereof is less than 0.1, the brake disk has high temper softening resistance but seriously low toughness, because a large amount of fine Nb precipitates are formed during tempering because of a large amount of solute Nb and the precipitates cause fracture. In order to secure toughness, the precipitated Nb-to-total Nb ratio thereof is preferably 0.1 or more and more preferably 0.2 or more. The amount of precipitated Nb is determined by chemically analyzing the residue of electrolytic extraction from the sample as described below and the amount of total Nb is determined by ordinary chemical analysis.

Density of dislocations present in martensitic structure

The brake disk according to the present invention needs to have a hardness of 32 to 38 HRC after quenching. In order to secure such hardness, the square root ($\sqrt{\rho}$) of the density ρ of dislocations present in the martensitic structure of the hardened brake disk is preferably within a range from $0.8 \times 10^8$ to $1.3 \times 10^8$ m$^{-1}$. The brake disk according to the present invention preferably has a hardness of 30 HRC or more after being tempered at 650°C for one hour. In order to secure such hardness, the square root ($\sqrt{\rho}$) of the density ρ of dislocations present in the martensitic structure of the tempered brake disk is preferably within a range from $0.6 \times 10^8$ to $1.3 \times 10^8$ m$^{-1}$. The dislocation density of the tempered brake disk is determined by fine Cu precipitates formed at the dislocations during tempering.

A method for producing a martensitic stainless steel sheet that is a basic material for producing the brake disk according to the present invention will now be described. The stainless steel sheet may be hot-rolled or cold-rolled one as long as conditions specified herein are satisfied.

The martensitic stainless steel sheet, which is used to produce the brake disk according to the present invention, is preferably produced from a steel material (slab) that is obtained in such a manner that molten steel having the above composition is melted in a steel converter, an electric furnace, an electric furnace, or the like; subjected to secondary refining such as VOD (vacuum oxygen decarburization) or AOD (argon oxygen decarburization); and then cast into a steel material (slab). The steel material is usually produced by an ingot making-slabbing process or a continuous casting process. In view of producibility and quality, the continuous casting process is preferably used.

Hot-rolled steel sheets and cold-rolled steel sheets can both be used to produce basic materials for brake disks as described above. Hot-rolled steel sheets with a thickness of about 3 to 8 mm are usually used to produce brake disks for motorcycles and motorcars. For these uses, the steel material is reheated to a temperature of 1100°C to 1250°C and then hot-rolled into a hot-rolled steel strip (steel sheet) with a predetermined thickness. The hot-rolled steel strip is preferably annealed at a temperature of higher than 750°C to 900°C for about ten hours in a batch-type box furnace as required and then used to produce for such brake disk materials. The resulting hot-rolled steel strip may be descaled by pickling, shot blast, or the like as required.

Brake disks for bicycles and the like have a thickness of about 2 mm and therefore are usually produced from cold-rolled steel sheets. For these uses, the hot-rolled steel strip is cold-rolled into a steel sheet, which is preferably annealed at a temperature of 600°C to 800°C, pickled as required, and then used to produce basic materials for such brake disk.

A method for producing the brake disk according to the present invention from a disk material obtained from the martensitic stainless steel sheet will now be described.

The disk material, which is obtained form the hot-rolled martensitic stainless steel sheet or cold-rolled martensitic stainless steel sheet, is machined a disk with a predetermined size by punching or the like. The disk is machined so as to have cooling holes having a function of dissipating the heat generated during braking to enhance braking performance. A friction portion of the disk that will meet brake pads is hardened so as to have a hardness of 32 to 38 HRC in such a manner that the friction portion is heated at a predetermined quenching temperature by high-frequency induction heating or the like, held at the quenching temperature for a predetermined time, and then cooled to room temperature. Surface scales formed by hardening are removed from the disk by shot blast or the like. Surfaces of the disk and sheared surfaces thereof are subjected to coating as required. In order to increase mechanical accuracy, the friction portion is mechanically ground, whereby a product (the brake disk) is obtained.

In order to produce the brake disk according to the present invention, quenching conditions are preferably as described below.

Quenching temperature: higher than 1000°C

The quenching temperature (heating temperature during quenching) is preferably within a γ region and is higher than 1000°C. The term "γ region" used herein means a region of temperature in which the percentage of an austenite phase is 75% by volume or more in the steel. When the quenching temperature is higher than 1000°C, the hardened friction portion has proper hardness (32 to 38 HRC) after quenching and has prior-γ grains with an average diameter of 8 μm or more and/or a precipitated Nb-to-total Nb ratio of less than 0.75. Since the friction portion is remarkably improved in temper softening resistance, the friction portion can be prevented from being reduced in hardness even if the friction portion is tempered at a high temperature of 650°C for one hour. Even if the quenching temperature is 1000°C or less, the friction portion can be improved in temper softening resistance in such a manner that the prior-γ grains are enlarged and/or the amount of precipitated Nb is reduced by increasing the holding time. However, this is not preferable because of a reduction in productivity. In order to enhance the temper softening resistance of the friction portion, the quenching temperature is preferably 1050°C or more and more preferably 1100°C or more. However, when the quenching temperature is higher than 1200°C, a large amount of δ-ferrite is formed and therefore 75% by volume or more of the austenite phase cannot be achieved; hence, the quenching temperature is preferably 1200°C or less. In view of quenching stability, the quenching temperature is preferably 1150°C or less. In order to fully transform the ferrite phase into the austenite phase, the holding time of the friction portion at the quenching temperature is preferably 30 seconds or more. A technique for heating the friction portion during quenching is not particularly limited. In view of producibility, the friction portion is preferably heated by high-frequency induction heating.

Cooling rate: 1°C/sec or more

After being heated at the quenching temperature, the friction portion is preferably cooled to an Ms point (martensitic transformation starting temperature) or less and more preferably 200°C or less at a rate of 1°C/sec or more. When the cooling rate of the friction portion is less than 1°C/sec, the hardness of the quenched friction portion cannot be adjusted to a proper range (32 to 38 HRC) because a portion of an austenite phase produced at the quenching temperature is transformed into a ferrite phase and therefore the amount of a martensite phase produced during quenching is small. The cooling rate thereof is preferably within a range from 5 to 500°C/sec. In order to achieve constant quenching hardness, the cooling rate is preferably 100°C/sec or more.

The brake disk, produced from the martensitic stainless steel as described above, according to the present invention has a hardness of 32 to 38 HRC and also has prior-γ grains with an average diameter of 8 μm or more and/or a precipitated Nb-to-total Nb ratio of less than 0.75. Therefore, the hardness of the brake disk can be maintained at 30 HRC or more even after the brake disk is tempered at 650°C for one hour, that is, the brake disk has excellent temper softening resistance.

Example 1

Different 19 types of martensitic stainless steels A to S having compositions shown in Table 1 were produced in a high-frequency melting furnace and then cast into 50 kg ingots. The ingots were hot-rolled into hot-rolled steel sheets with a thickness of 5 mm under ordinary known conditions. The hot-rolled steel sheets were annealed in such a manner that the hot-rolled steel sheets were heated at 800°C for eight hours in a reducing gas atmosphere, gradually cooled, and then descaled by pickling. Specimens having dimensions of 30 mm × 30 mm and a thickness equal to that of the hot-rolled annealed steel sheets were taken from the hot-rolled annealed steel sheets and then hardened under conditions shown in Table 2 to 4. The hardened specimens were observed for metal structure, measured for the amount of precipitated Nb, and subjected to a hardening stability test and a temper softening test. The specimens were measured for dislocation density after being hardened and tempered. The maximum temperature of γ-regions shown in Tables 2 to 4 refers to a maximum temperature at which an austenite (γ) phase is formed by 75 volume percent or more. At a temperature higher than or equal to the maximum temperature, a δ phase (ferrite phase) is increased and therefore the γ phase cannot be formed by 75 volume percent or more.

<Observation of metal structure>

A sample for metal structure observation was taken from each hardened specimen. A cross section of the sample was parallel to the hot-rolling direction and the thickness direction was polished and then etched with an Murakami reagent alkaline solution of red prussiate (10 g of a red prussiate, 10 g of caustic potassium (potassium hydrate), and 100 ml of water), whereby boundaries of prior-γ grains were exposed. Five or more fields (one field : 0.2 mm × 0.2 mm) were observed with an optical microscope (a magnification of 400 times). The grains contained in each field of view were measured for area with an image analysis device, whereby the equivalent circle diameters of the grains were determined. The equivalent circle diameters of the grains were averaged, whereby the average diameter of the prior-γ grains of the sample was determined.

<Measurement of amount of precipitated Nb>

A sample for electrolytic extraction was taken from each quenched specimen. The sample was subjected to electrolysis using an acetylacetone (10 volume percent)-tetramethylammonium chloride (1g/100-ml)-methanol electrolyte. A residue was extracted from the electrolyte using membrane filter (a pore size of 0.2 μm) and then cleaned, whereby a residual dross was extracted. The extracted residue dross was measured for the amount of Nb by inductively coupled plasma emission spectrometry, whereby the amount of precipitated Nb was determined.

<Hardening stability test>

Each quenched sample was descaled by pickling and then measured for surface hardness (HRC) at five points with a Rockwell hardness meter according to JIS Z 2245. The obtained measurements were averaged, whereby the hardness after quenching of the sample was determined. The samples having a hardness of 32 to 38 HRC were evaluated to have sufficient hardening stability.

<Temper softening test>

Each quenched sample was tempered in such a manner that the sample was heated at 650°C, held at this temperature for a time shown in Table 2, and then air-cooled. The tempered sample was descaled by pickling and then measured for surface hardness (HRC) at five points with a Rockwell hardness meter according to JIS Z 2245. The obtained measurements were averaged, whereby the hardness of the sample was determined. The samples having a hardness of 30 HRC or more were evaluated to have sufficient temper softening resistance.

<Measurement of dislocation density>

The dislocation density ρ of each sample was determined in such a manner that the hardened sample and the tempered sample were subjected to X-ray analysis. Each sample was subjected to X-ray diffraction using an X-ray source including a Co bulb and an integrated optical system under the following conditions: a step scan mode with a step width of 0.01°, a divergence slit angle of 1°, and a light-receiving slit width of 0.15 mm. The measurement time of each peak was adjusted such that peaks in a diffraction pattern had an intensity of several thousand counts. Three peaks (in a component of steel, martensite was supposed to be a cubic crystal) corresponding to plane indices {100}, {211}, and {220} other than {200} were used to calculate the dislocation density of the sample. After Kα1 and Kα2 in each peak were separated from each other using the X-ray diffraction pattern analysis program JADE 5.0 available from MDI, the half-value width thereof was corrected with the spread of a half-value width obtained by measuring an annealed Si powder used as an ideal sample with no strain, whereby the true half-value width was obtained. Nonuniformity strain (ε) was calculated from the true half-value width by the Williamson-Hall method. The dislocation density of the sample was calculated using the following equation:

$$\rho = 14.4\varepsilon^2/b^2$$

wherein b represents the magnitude of the Berger spectrum and is 0.25 nm.

Table 1

| Steel number | Chemical components (mass percent) | | | | | | | | | | | | | Left-hand side value of Inequality (1) | middie term value of Inequality (2) | Remarks |
|---|---|---|---|---|---|---|---|---|---|---|---|---|---|---|---|---|
| | C | Si | Mn | P | S | Al | Cr | N | Cu | Nb | Mo | Ni | Others | | | |
| A | 0.041 | 0.33 | 1.55 | 0.03 | 0.005 | 0.003 | 12.25 | 0.016 | 1.03 | 0.11 | - | 0.62 | - | 36.8 | 0.042 | Example |
| B | 0.044 | 0.25 | 1.44 | 0.02 | 0.003 | 0.005 | 12.33 | 0.038 | 0.88 | 0.15 | - | 0.64 | - | 32.6 | 0.061 | Example |
| C | 0.043 | 0.21 | 1.65 | 0.03 | 0.002 | 0.033 | 12.18 | 0.035 | 0.61 | 0.10 | - | 0.03 | - | 36.4 | 0.064 | Example |
| D | 0.055 | 0.15 | 1.28 | 0.02 | 0.003 | 0.005 | 12.68 | 0.037 | 2.05 | 0.25 | - | 0.51 | - | 32.1 | 0.057 | Example |
| E | 0.042 | 0.23 | 1.55 | 0.03 | 0.002 | 0.004 | 12.88 | 0.042 | 1.22 | 0.11 | - | 0.62 | V: 0.13 | 32.2 | 0.069 | Example |
| F | 0.044 | 0.08 | 1.85 | 0.02 | 0.005 | 0.003 | 11.63 | 0.042 | 1.44 | 0.12 | 1.15 | 0.72 | - | 38.4 | 0.069 | Example |
| G | 0.042 | 0.30 | 1.61 | 0.03 | 0.003 | 0.005 | 12.23 | 0.045 | 1.03 | 0.12 | 0.02 | 0.27 | Co: 0.04 | 33.0 | 0.070 | Example |
| H | 0.042 | 0.27 | 1.28 | 0.03 | 0.002 | 0.003 | 12.20 | 0.046 | 0.59 | 0.11 | 0.01 | 0.63 | V: 0.12, B: 0.0025 | 31.6 | 0.073 | Example |
| I | 0.044 | 0.33 | 1.33 | 0.02 | 0.005 | 0.002 | 12.82 | 0.046 | 1.15 | 0.15 | 0.04 | 0.60 | V: 0.08 | 34.8 | 0.069 | Example |
| J | 0.042 | 0.28 | 1.42 | 0.03 | 0.003 | 0.003 | 12.40 | 0.039 | 1.22 | 0.10 | - | 0.65 | Ca: 0.0015 | 31.1 | 0.067 | Example |
| K | 0.095 | 0.31 | 0.88 | 0.03 | 0.002 | 0.011 | 12.12 | 0.009 | 2.05 | 0.31 | - | 0.51 | V: 0.02 | 30.2 | 0.061 | Example |
| L | 0.042 | 0.88 | 0.33 | 0.04 | 0.005 | 0.065 | 14.82 | 0.045 | 3.18 | 0.04 | - | 1.05 | V: 0.07, Ta: 0.05 | 42.0 | 0.081 | Example |
| M | 0.064 | 0.52 | 1.11 | 0.03 | 0.010 | 0.003 | 10.74 | 0.055 | 0.95 | 0.28 | - | 0.15 | Zr: 0.08 | 27.9 | 0.080 | Example |
| N | 0.034 | 0.26 | 1.84 | 0.02 | 0.004 | 0.005 | 12.55 | 0.048 | 1.21 | 0.13 | - | 0.51 | Ti: 0.06 | 31.9 | 0.064 | Example |
| O | 0.044 | 0.22 | 1.51 | 0.03 | 0.004 | 0.003 | 12.11 | 0.036 | <u>0.35</u> | 0.11 | - | 0.56 | - | 32.4 | 0.065 | Comparative example |
| P | 0.034 | 0.25 | 1.61 | 0.03 | 0.005 | 0.005 | 12.22 | 0.035 | 0.68 | 0.00 | - | 0.61 | - | 31.0 | 0.069 | Comparative example |
| Q | 0.043 | 0.51 | 1.26 | 0.02 | 0.003 | 0.005 | 12.91 | 0.035 | 0.75 | 0.15 | - | 0.13 | V: 0.05 | <u>44.9</u> | 0.057 | Comparative example |

EP 2 011 891 A1

13

(continued)

| Steel number | Chemical components (mass percent) | | | | | | | | | | | | | Left-hand side value of Inequality (1) | middle term value of Inequality (2) | Remarks |
|---|---|---|---|---|---|---|---|---|---|---|---|---|---|---|---|---|
| | C | Si | Mn | P | S | Al | Cr | N | Cu | Nb | Mo | Ni | Others | | | |
| R | 0.026 | 0.13 | 1.69 | 0.03 | 0.008 | 0.005 | 12.20 | 0.036 | 0.85 | 0.28 | - | 0.56 | - | 39.5 | 0.023 | Comparative example |
| S | 0.055 | 0.21 | 1.43 | 0.02 | 0.003 | 0.003 | 12.33 | 0.055 | 1.22 | 0.09 | 0.33 | 0.17 | - | 31.8 | 0.097 | Comparative example |

Table 2

| No. | Steel number | Maximum temperature of γ regions (°C) | Quenching conditions | | | Hardness after quenching (HRC) | Evaluation of hardness after quenching | Average diameter of prior-γ grains (μm) | Amount of precipitated Nb / amount of total Nb | Holding time during tempering (hr) | Hardness after tempering (HRC) | Evaluation of hardness after tempering | $\sqrt{\rho}$ (× 10⁸ m⁻¹) | | Remarks |
|---|---|---|---|---|---|---|---|---|---|---|---|---|---|---|---|
| | | | Quenching temperature (°C) | Holding time (min) | Cooling rate (°C/sec) | | | | | | | | Quenched | Tempered | |
| 1 | A | 1170 | 950 | 1 | 10 | 31 | × Inferior | 4 | 0.87 | 1 | 23 | × Inferior | 0.7 | 0.1 | Comparative example |
| 2 | A | 1170 | 1000 | 1 | 10 | 32 | ○ Superior | 5 | 0.81 | 1 | 24 | × Inferior | 0.8 | 0.1 | Comparative example |
| 3 | A | 1170 | 1050 | 1 | 10 | 32 | ○ Superior | 8 | 0.66 | 1 | 30 | ○ Superior | 0.8 | 0.6 | Example |
| 4 | A | 1170 | 1100 | 1 | 10 | 33 | ○ Superior | 10 | 0.47 | 1 | 31 | ○ Superior | 0.8 | 0.7 | Example |
| 5 | A | 1170 | 1150 | 1 | 10 | 32 | ○ Superior | 15 | 0.34 | 1 | 31 | ○ Superior | 0.8 | 0.7 | Example |
| 6 | A | 1170 | 1200 | 1 | 10 | 30 | × Inferior | 20 | 0.30 | 1 | 28 | × Inferior | 0.6 | 0.3 | Comparative example |
| 7 | B | 1200 | 950 | 10 | 10 | 35 | ○ Superior | 5 | 0.82 | 1 | 25 | × Inferior | 1.0 | 0.2 | Comparative example |
| 8 | B | 1200 | 1000 | 10 | 10 | 35 | ○ Superior | 9 | 0.70 | 1 | 31 | ○ Superior | 1.0 | 0.7 | Example |
| 9 | B | 1200 | 1050 | 10 | 10 | 35 | ○ Superior | 15 | 0.45 | 1 | 31 | ○ Superior | 1.0 | 0.7 | Example |
| 10 | B | 1200 | 1100 | 10 | 10 | 35 | ○ Superior | 20 | 0.35 | 1 | 32 | ○ Superior | 1.1 | 0.8 | Example |
| 11 | B | 1200 | 1150 | 10 | 10 | 34 | ○ Superior | 26 | 0.20 | 1 | 32 | ○ Superior | 1.0 | 0.8 | Example |
| 12 | C | 1170 | 1000 | 10 | 200 | 35 | ○ Superior | 5 | 0.79 | 1 | 24 | × Inferior | 1.0 | 0.2 | Comparative example |
| 13 | C | 1170 | 1050 | 10 | 200 | 35 | ○ Superior | 10 | 0.55 | 1 | 31 | ○ Superior | 1.0 | 0.7 | Example |
| 14 | C | 1170 | 1150 | 10 | 200 | 34 | ○ Superior | 20 | 0.25 | 1 | 32 | ○ Superior | 0.9 | 0.8 | Example |
| 15 | C | 1170 | 1200 | 10 | 200 | 30 | × Inferior | 30 | 0.19 | 1 | 29 | × Inferior | 0.7 | 0.6 | Comparative example |
| 16 | D | 1200 | 1000 | 1 | 1 | 33 | ○ Superior | 4 | 0.85 | 1 | 26 | × Inferior | 0.8 | 0.3 | Comparative example |
| 17 | D | 1200 | 1030 | 1 | 1 | 33 | ○ Superior | 8 | 0.73 | 1 | 30 | ○ Superior | 0.8 | 0.6 | Example |
| 18 | D | 1200 | 1100 | 1 | 1 | 34 | ○ Superior | 10 | 0.52 | 1 | 30 | ○ Superior | 0.9 | 0.7 | Example |
| 19 | D | 1200 | 1150 | 1 | 1 | 34 | ○ Superior | 15 | 0.41 | 1 | 31 | ○ Superior | 0.9 | 0.7 | Example |
| 20 | E | 1200 | 1000 | 1 | 10 | 35 | ○ Superior | 5 | 0.80 | 1 | 23 | × Inferior | 1.1 | 0.1 | Comparative example |
| 21 | E | 1200 | 1050 | 1 | 10 | 35 | ○ Superior | 9 | 0.38 | 1 | 32 | ○ Superior | 1.1 | 0.8 | Example |
| 22 | E | 1200 | 1170 | 1 | 10 | 35 | ○ Superior | 17 | 0.32 | 1 | 33 | ○ Superior | 1.1 | 0.9 | Example |
| 23 | E | 1200 | 1200 | 1 | 10 | 34 | ○ Superior | 22 | 0.28 | 1 | 34 | ○ Superior | 1.0 | 0.9 | Example |

Table 3

| No. | Steel number | Maximum temperature of γ regions (°C) | Quenching conditions | | | Hardness after quenching (HRC) | Evaluation of hardness after quenching | Average diameter of prior-γ grains (μm) | Amount of precipitated Nb / amount of total Nb | Holding time during tempering (hr) | Hardness after tempering (HRC) | Evaluation of hardness after tempering | $\sqrt{\rho}$ (× 10⁸ m⁻¹) | | Remarks |
|---|---|---|---|---|---|---|---|---|---|---|---|---|---|---|---|
| | | | Quenching temperature (°C) | Holding time (min) | Cooling rate (°C/sec) | | | | | | | | Quenched | Tempered | |
| 24 | F | 1170 | 1000 | 1 | 1 | 35 | ○ Superior | 5 | 0.86 | 1 | 26 | × Inferior | 1.1 | 0.4 | Comparative example |
| 25 | F | 1170 | 1050 | 1 | 1 | 35 | ○ Superior | 8 | 0.69 | 1 | 33 | ○ Superior | 1.1 | 0.9 | Example |
| 26 | F | 1170 | 1150 | 1 | 1 | 35 | ○ Superior | 15 | 0.37 | 1 | 34 | ○ Superior | 1.1 | 1.0 | Example |
| 27 | F | 1170 | 1200 | 1 | 1 | 30 | × Inferior | 21 | 0.32 | 1 | 29 | × Inferior | 0.6 | 0.6 | Comparative example |
| 28 | G | 1200 | 1000 | 10 | 10 | 36 | ○ Superior | 8 | 0.72 | 1 | 32 | ○ Superior | 1.2 | 0.9 | Example |
| 29 | G | 1200 | 1050 | 10 | 10 | 36 | ○ Superior | 15 | 0.51 | 1 | 33 | ○ Superior | 1.1 | 0.8 | Example |
| 30 | G | 1200 | 1150 | 10 | 10 | 37 | ○ Superior | 25 | 0.22 | 1 | 34 | ○ Superior | 1.2 | 1.0 | Example |
| 31 | H | 1200 | 1000 | 1 | 10 | 36 | ○ Superior | 4 | 0.82 | 1 | 24 | × Inferior | 1.0 | 0.2 | Comparative example |
| 32 | H | 1200 | 1030 | 1 | 10 | 36 | ○ Superior | 8 | 0.73 | 1 | 31 | ○ Superior | 1.2 | 0.7 | Example |
| 33 | H | 1200 | 1150 | 1 | 10 | 36 | ○ Superior | 15 | 0.32 | 1 | 32 | ○ Superior | 1.2 | 0.8 | Example |
| 34 | H | 1200 | 1230 | 1 | 10 | 31 | × Inferior | 25 | 0.26 | 1 | 27 | × Inferior | 0.6 | 0.5 | Comparative example |
| 35 | I | 1200 | 1000 | 1 | 10 | 35 | ○ Superior | 6 | 0.85 | 1 | 26 | × Inferior | 1.0 | 0.5 | Comparative example |
| 36 | I | 1200 | 1050 | 1 | 10 | 35 | ○ Superior | 9 | 0.69 | 1 | 33 | ○ Superior | 1.1 | 0.8 | Example |
| 37 | I | 1200 | 1100 | 1 | 10 | 35 | ○ Superior | 11 | 0.51 | 1 | 33 | ○ Superior | 1.1 | 0.9 | Example |
| 38 | I | 1200 | 1150 | 1 | 0.1 | 31 | × Inferior | 17 | 0.77 | 1 | 29 | × Inferior | 0.7 | 0.6 | Comparative example |
| 39 | I | 1200 | 1150 | 1 | 10 | 35 | ○ Superior | 15 | 0.35 | 1 | 34 | ○ Superior | 1.2 | 1.1 | Example |
| 40 | J | 1230 | 1000 | 1 | 10 | 35 | ○ Superior | 5 | 0.83 | 1 | 25 | × Inferior | 1.1 | 0.4 | Comparative example |
| 41 | J | 1230 | 1050 | 1 | 10 | 35 | ○ Superior | 9 | 0.69 | 1 | 31 | ○ Superior | 1.1 | 0.7 | Example |
| 42 | J | 1230 | 1170 | 1 | 10 | 35 | ○ Superior | 17 | 0.31 | 1 | 32 | ○ Superior | 1.2 | 0.8 | Example |
| 43 | J | 1230 | 1230 | 1 | 10 | 34 | ○ Superior | 26 | 0.24 | 1 | 32 | ○ Superior | 1.1 | 0.8 | Example |
| 44 | K | 1230 | 1000 | 1 | 10 | 35 | ○ Superior | 5 | 0.85 | 1 | 25 | × Inferior | 1.1 | 0.3 | Comparative example |
| 45 | K | 1230 | 1150 | 1 | 10 | 35 | ○ Superior | 16 | 0.39 | 1 | 31 | ○ Superior | 1.2 | 0.7 | Example |
| 46 | K | 1230 | 1230 | 1 | 10 | 34 | ○ Superior | 26 | 0.28 | 1 | 31 | ○ Superior | 1.1 | 0.7 | Example |

Table 4

| No. | Steel number | Maximum temperature of γ regions (°C) | Quenching conditions | | | Hardness after quenching (HRC) | Evaluation of hardness after quenching | Average diameter of prior-γ grains (μm) | Amount of precipitated Nb / amount of total Nb | Holding time during tempering (hr) | Hardness after tempering (HRC) | Evaluation of hardness after tempering | $\sqrt{\rho}$ (×10⁸ m⁻¹) | | Remarks |
|---|---|---|---|---|---|---|---|---|---|---|---|---|---|---|---|
| | | | Quenching temperature (°C) | Holding time (min) | Cooling rate (°C/sec) | | | | | | | | Quenched | Tempered | |
| 47 | L | 1150 | 1000 | 1 | 10 | 37 | o Superior | 6 | 0.76 | 1 | 25 | × Inferior | 1.2 | 0.3 | Comparative example |
| 48 | L | 1150 | 1100 | 1 | 10 | 37 | o Superior | 10 | 0.45 | 1 | 30 | o Superior | 1.2 | 0.7 | Example |
| 49 | L | 1150 | 1150 | 1 | 10 | 37 | o Superior | 17 | 0.31 | 1 | 31 | o Superior | 1.2 | 0.7 | Example |
| 50 | M | 1250 | 1000 | 1 | 10 | 37 | o Superior | 5 | 0.85 | 1 | 25 | × Inferior | 1.1 | 0.3 | Comparative example |
| 51 | M | 1250 | 1150 | 1 | 10 | 37 | o Superior | 15 | 0.44 | 1 | 31 | o Superior | 1.2 | 0.7 | Example |
| 52 | M | 1250 | 1250 | 1 | 10 | 36 | o Superior | 30 | 0.30 | 1 | 31 | o Superior | 1.1 | 0.7 | Example |
| 53 | N | 1200 | 1000 | 1 | 10 | 35 | o Superior | 5 | 0.81 | 1 | 25 | × Inferior | 0.9 | 0.3 | Comparative example |
| 54 | N | 1200 | 1150 | 1 | 10 | 35 | o Superior | 15 | 0.35 | 1 | 31 | o Superior | 1.0 | 0.7 | example |
| 55 | O | 1200 | 1000 | 1 | 10 | 35 | o Superior | 5 | 0.83 | 1 | 24 | × Inferior | 1.0 | 0.3 | Comparative example |
| 56 | O | 1200 | 1050 | 1 | 10 | 35 | o Superior | 8 | 0.68 | 1 | 29 | × Inferior | 0.9 | 0.6 | Comparative example |
| 57 | O | 1200 | 1100 | 1 | 10 | 35 | o Superior | 11 | 0.51 | 1 | 29 | × Inferior | 0.9 | 0.6 | Comparative example |
| 58 | O | 1200 | 1150 | 1 | 10 | 35 | o Superior | 16 | 0.38 | 1 | 29 | × Inferior | 1.0 | 0.7 | Comparative example |
| 59 | P | 1200 | 1000 | 1 | 10 | 35 | o Superior | 5 | - | 1 | 22 | × Inferior | 0.9 | 0.2 | Comparative example |
| 60 | P | 1200 | 1100 | 1 | 10 | 35 | o Superior | 12 | - | 1 | 26 | × Inferior | 0.9 | 0.5 | Comparative example |
| 61 | P | 1200 | 1150 | 1 | 10 | 35 | o Superior | 18 | - | 1 | 27 | × Inferior | 0.9 | 0.6 | Comparative example |
| 62 | Q | 1100 | 1000 | 1 | 10 | 32 | o Superior | 5 | 0.82 | 1 | 23 | × Inferior | 0.8 | 0.3 | Comparative example |
| 63 | Q | 1100 | 1050 | 1 | 10 | 32 | o Superior | 8 | 0.69 | 1 | 29 | × Inferior | 0.9 | 0.5 | Comparative example |
| 64 | Q | 1100 | 1150 | 1 | 10 | 31 | × Inferior | 16 | 0.39 | 1 | 28 | × Inferior | 0.7 | 0.4 | Comparative example |
| 65 | R | 1170 | 1000 | 1 | 10 | 29 | × Inferior | 5 | 0.85 | 1 | 22 | × Inferior | 0.6 | 0.3 | Comparative example |
| 66 | R | 1170 | 1100 | 1 | 10 | 30 | × Inferior | 11 | 0.51 | 1 | 28 | × Inferior | 0.6 | 0.5 | Comparative example |
| 67 | R | 1170 | 1150 | 1 | 10 | 30 | × Inferior | 15 | 0.40 | 1 | 29 | × Inferior | 0.6 | 0.5 | Comparative example |
| 68 | S | 1200 | 1000 | 1 | 10 | 41 | × Inferior | 5 | 0.78 | 1 | 32 | o Superior | 1.6 | 0.9 | Comparative example |
| 69 | S | 1200 | 1100 | 1 | 10 | 41 | × Inferior | 12 | 0.52 | 1 | 35 | o Superior | 1.7 | 1.2 | Comparative example |
| 70 | S | 1200 | 1150 | 1 | 10 | 42 | × Inferior | 17 | 0.33 | 1 | 36 | o Superior | 1.7 | 1.2 | Comparative example |

The test results are summarized in Tables 2 to 4. Examples (examples of the present invention) meeting the requirements of the present invention have a quenching hardness of 32 to 38 HRC, that is, the examples are excellent in hardening stability. Furthermore, the examples have a hardness of 30 HRC or more after being tempered, that is, the examples have sufficient temper softening resistance. On the other hand, comparative examples short of the requirements of the present invention have a quenching hardness outside a range from 32 to 38 HRC or a hardness of less than 30 HRC after being tempered, that is, the comparative examples are superior in temper softening resistance.

Industrial Applicability

A technique according to the present invention can be applied to heat-resistant steels used for turbine blades or the like and high-strength steels used for springs, industrial tools, or the like.

**Claims**

1. A brake disk having a martensitic structure having prior-austenite grains with an average diameter of 8 μm or more, a hardness of 32 to 38 HRC, and high temper softening resistance, the brake disk containing, by mass, 0.1% or less of C, 1.0% or less of Si, 2.0% or less of Mn, 10.5% to 15.0% of Cr, 2.0% or less of Ni, greater than 0.5% to 4.0% of Cu, 0.02% to 0.3% of Nb, and 0.1% or less of N and further containing C, N, Nb, Cr, Si, Ni, Mn, Mo, and Cu, the remainder being Fe and unavoidable impurities, such that the following inequalities are satisfied:

$$5Cr + 10Si + 15Mo + 30Nb - 9Ni - 5Mn - 3Cu - 225N - 270C < 45 \tag{1}$$

$$0.03 \leq \{C + N - (13 / 93)Nb\} \leq 0.09 \tag{2}$$

2. The brake disk according to Claim 1, wherein a precipitated Nb-to-total Nb ratio that is defined as the ratio of the amount of precipitated Nb to the amount of total Nb is less than 0.75 and the following inequalities are satisfied:

$$5Cr + 10Si + 15Mo + 30Nb - 9Ni - 5Mn - 3Cu - 225N -$$

$$270C < 45 \hspace{3cm} (1)$$

$$0.03 \le \{C + N - (13 / 93)Nb\} \le 0.09 \hspace{2cm} (2).$$

3.  The brake disk according to Claim 1 or 2, wherein the square root ($\sqrt{\rho}$) of the density $\rho$ of dislocations present in the martensitic structure is within a range from $0.8 \times 10^8$ to $1.3 \times 10^8$ $m^{-1}$.

4.  The brake disk according to any one of Claims 1 to 3, having a hardness of 30 HRC or more after being tempered at 650°C for one hour.

5.  The brake disk according to any one of Claims 1 to 3, having fine Cu precipitates formed at the dislocations, wherein the square root ($\sqrt{\rho}$) of the density $\rho$ of the dislocations present in the martensitic structure tempered at 650°C for one hour is within a range from $0.6 \times 10^8$ to $1.3 \times 10^8$ $m^{-1}$.

6.  The brake disk according to any one of Claims 1 to 5, further containing one or both of 0.01% to 2.0% of Mo and 0.01% to 1.0% of Co on a mass basis.

7.  The brake disk according to any one of Claims 1 to 6, further containing one or more selected from the group consisting of, by mass, 0.02% to 0.3% of Ti, 0.02% to 0.3% of V, 0.02% to 0.3% of Zr, and 0.02% to 0.3% of Ta.

8.  The brake disk according to any one of Claims 1 to 7, further containing, by mass, one or both of 0.0005% to 0.0050% of B and 0.0005% to 0.0050% of Ca.

# FIG. 1

Graph — Y-axis: HARDNESS HRC (25, 30, 35, 40); X-axis: AVERAGE DIAMETER OF PRIOR-γ GRAINS (μm) (0, 5, 10, 15, 20).

QUENCHED

(1150°C)
(1100°C)
(1050°C)
(1000°C)

650°C × 1hr TEMPERED

BRACKETED NUMBERS REFER TO QUENCHING TEMPERATURES

# FIG. 2

## INTERNATIONAL SEARCH REPORT

| | International application No. |
|---|---|
| | PCT/JP2006/320358 |

| A. CLASSIFICATION OF SUBJECT MATTER |
|---|
| *C22C38/00*(2006.01)i, *C21D9/46*(2006.01)i, *C22C38/58*(2006.01)i, *F16D65/12* (2006.01)i |

According to International Patent Classification (IPC) or to both national classification and IPC

| B. FIELDS SEARCHED |
|---|
| Minimum documentation searched (classification system followed by classification symbols) |
| C22C38/00-38/60, C21D9/46-9/48, F16D65/12 |

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| E,X | JP 2006-291240 A (JFE Steel Corp.),<br>26 October, 2006 (26.10.06),<br>Claims<br>(Family: none) | 1,2,4,6-8 |
| X<br>Y | JP 2005-133204 A (JFE Steel Corp.),<br>26 May, 2005 (26.05.05),<br>Claims; tables 1, 2; examples<br>(Family: none) | 1,2,4,6-8<br>3,5 |
| Y | JP 2001-192779 A (Nippon Steel Corp.),<br>17 July, 2001 (17.07.01),<br>Claims; Par. Nos. [0013], [0014], [0025]<br>(Family: none) | 3,5 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 November, 2006 (15.11.06) | 21 November, 2006 (21.11.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57198249 A
- JP 60106951 A
- JP 2002146489 A
- JP 3315974 B
- JP 2001220654 A
- JP 2002121656 A